# EUROPÄISCHE PATENTSCHRIFT

(11) **EP 1 474 699 B1**
(45) Veröffentlichungstag und Bekanntmachung des Hinweises auf die Patenterteilung: **21.03.2007**
(21) Anmeldenummer: 03729219.0
(22) Anmeldetag: 02.01.2003
(51) Int. Cl.: G01S 1/56, G01S 5/08

(54) **VERFAHREN ZUR POSITIONSBESTIMMUNG MIT HILFE EINES FUNKSIGNALS MIT ROTIERENDER SENDECHARAKTERISTIK**
METHOD FOR DETERMINING A POSITION WITH THE AID OF A RADIO SIGNAL HAVING A ROTATING TRANSMISSION CHARACTERISTIC
PROCEDE DE DETERMINATION DE POSITION A L'AIDE D'UN SIGNAL RADIO EMIS EN ROTATION

(30) Priorität: 10.01.2002 EP 02000613; 10.01.2002 DE 10200676
(43) Veröffentlichungstag der Anmeldung: 10.11.2004
(73) Patentinhaber: SIEMENS AKTIENGESELLSCHAFT, 80333 München (DE)
(72) Erfinder: KRAUSE, Jörn, 12107 Berlin (DE); PURAT, Marcus, 12209 Berlin (DE); MEILING, Axel, 13597 Berlin (DE); SCHMIDT, Malte, 46397 Bocholt (DE); WALES, Stephen, William, Southampton, Hampshire SO17 1EH (GB)
(86) Internationale Anmeldenummer: PCT/EP2003/000004
(87) Internationale Veröffentlichungsnummer: WO 2003/058272

(56) Entgegenhaltungen:
- WO-A-99/33302
- GB-A- 1 176 199
- GB-A- 1 233 384
- US-A- 2 661 467
- US-A- 3 349 399
- US-A- 4 939 522
- US-A- 5 157 408

## Beschreibung

Verfahren zur Positionsbestimmung mit Hilfe eines Funksignals mit rotierender Sendecharakteristik

Die vorliegende Erfindung betrifft ein Verfahren zur Positionsbestimmung mit Hilfe von Funk-Navigation. Es wird hierfür mindestens ein Funksignal mit rotierender Sendecharakteristik verwendet. Dieses Verfahren ist für die Positionsbestimmung eines mobilen Objekts relativ zu mindestens einem anderen mobilen oder stationären Objekt, also relativ zu mindestens einer Referenzstation, anwendbar.

Ein solches Verfahren ist prinzipiell aus US 5,157,408 bekannt. Dort wird eine Bestimmung des relativen Abstandes und der relativen Lage eines mobilen Objekts zu einer Referenzstation beschrieben, welche eine rotierende Antenne zur Abstrahlung eines rotierenden Funksignal besitzt. Als Funksignal wird dabei ein pseudo-rauschkodiertes (Pseudo Noise coded d.h. PN coded) Spreizspektrum-Signal ausgesandt, das mit einer Information über die Abstrahlungsrichtung des rotierenden Funksignals moduliert wird, woraus das mobile Objekt seine relative Lage zur Referenzstation ermitteln kann. Als Alternative hierzu wird beschrieben, dass das mobile Objekt die Lage aus der Zeitdifferenz zwischen dem Zeitpunkt des Empfangs des rotierenden Funksignals mit maximaler Empfangsfeldstärke und der Aussendung eines Nordreferenzsignals für die Nordorientierung des rotierenden Funksignals ermitteln kann. Den relativen Abstand ermittelt das mobile Objekt durch Aussenden eines Anfragesignals an die Referenzstation, die mit einem entsprechenden Antwortsignal antwortet. Aus der Laufzeit der Signale bzw. der Phasenverschiebung zwischen Anfragesignal und Antwortsignal kann das mobile Objekt den relativen Abstand zur Referenzstation ermitteln.

Aus der WO-A-99/33302 ist ebenfalls ein Verfahren bekannt, bei dem der Ort eines Endgerätes mittels des Empfangs von umlaufenden Funkstrahlen zweier Basisstationen bestimmt wird, wobei der Ort der Basisstationen bekannt ist.

Nachteilig an diesem Stand der Technik ist jedoch, dass einerseits zur Lagebestimmung ständig definierte, allein für die Positionsbestimmung nutzbare Daten an das mobile Objekt übertragen werden müssen, aus denen das mobile Objekt die Orientierung des Funksignals bestimmt, andererseits zur Abstandsbestimmung eine nochmals zusätzliche Signalisierung zwischen dem mobilen Objekt und der Referenzstation erforderlich ist. Das Verfahren nach dem Stand der Technik bindet also ständig einen bestimmten Teil an Übertragungskapazität und ist damit insbesondere nachteilig für Funksysteme, in denen noch weitere Daten per Funk übertragen werden sollen wie beispielsweise in bekannten Funk-Kommunikationssystemen.

Aufgabe der vorliegenden Erfindung ist es, eine Möglichkeit bereit zu stellen, eine Positionsbestimmung mittels eines Funksignals mit rotierender Sendecharakteristik bei einem geringeren Bedarf an Übertragungskapazität durchzuführen.

Diese Aufgabe wird gelöst durch das Verfahren und das Teilnehmer-Endgerät mit den Merkmalen der unabhängigen Patentansprüche 1 und 13. Vorteihafte Weiterbildungen sind den abhängigen Patentansprüchen entnehmbar.

Die vorliegende Erfindung umfasst ein Verfahren zur Positionsbestimmung eines mobilen Objekts mit Hilfe von Funk-Navigation unter Verwendung mindestens eines Funksignals mindestens einer Referenzstation. Als mobiles Objekt kommen beispielsweise mobile Endgeräte eines Funk-Kommunikationssystems in Frage, aber auch andere mobile Objekte wie z.B. Fahrzeuge, Roboter o.ä., die zumindest mit geeigneten Einrichtungen zur Funk-Navigation ausgestattet sind.

Gemäß der vorliegenden Erfindung ist vorgesehen, dass zunächst dem mobilen Objekt der Zusammenhang zwischen der Orientierung der Sendecharakteristik und Referenzereignissen mitgeteilt wird. Diese Information kann dem mobilen Objekt im einfachsten Fall einmalig oder auch in größeren Zeitabständen regelmäßig - von der Referenzstation oder anderen geeigneten Einrichtungen - mitgeteilt und dann in einem Datenspeicher des mobilen Objekts abgelegt werden. Es ist dann also nur eine einmalige oder allenfalls in größeren Zeitabständen regelmäßige Signalisierung zwischen der Referenzstation und dem mobilen Objekt erforderlich. Die Information kann aber auch beispielsweise bereits vor Durchführung des beschriebenen Verfahrens in einem geeigneten Datenspeicher des mobilen Objekts abgespeichert werden, beispielsweise bei Herstellung des mobilen Objekts wie z.B. eines Endgerätes für ein FunkKommunikationssystem.

Das mobile Objekt überprüft dann bei Detektion der rotierenden Sendecharakteristik des Funksignals - das also wie beschrieben über einen Winkelbereich von 360 ° um die Referenzstation eine zeitlich variierende Sendecharakteristik besitzt - lediglich das Vorliegen eines Referenzereignisses, ohne dass eine weitere Signalisierung zwischen dem mobilen Objekt und der Referenzstation erforderlich wäre. Mit Hilfe der gespeicherten Informationen über den Zusammenhang zwischen den Referenzereignissen und der Orientierung der Sendecharakteristik kann das mobile Objekt aus dem Referenzereignis die Orientierung der Sendecharakteristik ermitteln. Aus der Orientierung der Sendecharakteristik wiederum kann das mobile Objekt seine relative Lage zur Referenzstation bestimmen. Damit liegt ein erster Teil der gewünschten Positionsinformationen des mobilen Objekts vor.

Schließlich kann das mobile Objekt gemäß einer ersten Weiterbildung seinen relativen Abstand zur Referenzstation aus Signalparametern des Funksignals. Damit greift das mobile Objekt auf Informationen zu, die ohnehin im Rahmen der Aussendung des Funksignals verfügbar sind, ohne dass es dazu einer zusätzlichen Signalisierung bedarf. Als Signalparameter können seitens des mobilen Objekts gemessene physikalische Übertragungsparameter des Funksignals betrachtet werden wie beispielsweise die Abschwächung des Sendesignals (Path Loss) entlang des Ausbreitungsweges, das Signal-Rausch-Verhältnis (Signal to Noise Ratio) oder ähnliche Qualitätsparameter. Alternativ oder zusätzlich können als Signalparameter aber auch Dateninhalte des Funksignals betrachtet werden, die Informationen über physikalische Übertragungsparameter des Funksignals beinhalten. Hierbei können beispielsweise Dateninhalte betrachtet werden, die Informationen über die Signallaufzeit zwischen der Referenzstation und dem mobilen Objekt beinhalten, wie die Timing Advance-Information in Funk-Kommunikationssystemen.

Alternativ kann aber auch vorgesehen sein, dass das mobile Objekt allein aufgrund von Informationen über die relative Lage zu mehreren Referenzstationen seine Position bestimmt, wobei die relative Lage wie vorstehend beschrieben ermittelt wird. Hierbei handelt es sich also wiederum um ein Verfahren zur Positionsbestimmung eines mobilen Objekts mit Hilfe von Funk-Navigation unter Verwendung mindestens eines Funksignals mit rotierender Sendecharakteristik mindestens einer Referenzstation. Auch in diesem Fall ist vorgesehen, dass zunächst dem mobilen Objekt der Zusammenhang zwischen der Orientierung der Sendecharakteristik und Referenzereignissen mitgeteilt wird, wie bereits oben beschrieben.

Es ist nun vorgesehen, dass das mobile Objekt bei Detektion der rotierenden Sendecharakteristik eines ersten Funksignals das Vorliegen eines Referenzereignisses überprüft, aus dem Referenzereignis die Orientierung der Sendecharakteristik des ersten Funksignals ermittelt und aus der Orientierung der Sendecharakteristik des ersten Funksignals seine relative Lage zu einer ersten Referenzstation bestimmt. In einem zweiten Schritt überprüft das mobile Objekt bei Detektion der rotierenden Sendecharakteristik eines zweiten Funksignals das Vorliegen eines weiteren Referenzereignisses, ermittelt aus dem weiteren Referenzereignis die Orientierung der Sendecharakteristik des zweiten Funksignals und bestimmt aus der Orientierung der Sendecharakteristik des zweiten Funksignals seine relative Lage zu einer zweiten Referenzstation.

Diese Schritte entsprechen den bereits beschriebenen Schritten zur Bestimmung der relativen Lage. Da nun aber die relative Lage des mobilen Objekts zu zwei Referenzstationen bekannt ist, kann das mobile Objekt aus der relativen Lage zu der ersten und zweiten Referenzstation seine relative Position zu den Referenzstationen ermitteln. Diese ergibt sich geometrisch aus dem Schnittpunkt zweier Geraden, die von den Standorten der Referenzstationen ausgehen und deren Richtung durch die relative Lage des mobilen Objekts zu den Referenzstationen definiert wird.

Als Referenzereignisse nach den vorgenannten Verfahren können dem mobilen Objekt beispielsweise zeitliche Referenzereignisse mitgeteilt werden. Dabei kann insbesondere mitgeteilt werden, zu welchem Zeitpunkt, nach welcher Zeitdauer ab einem bestimmten Startzeitpunkt oder mit welcher Zeitperiode die rotierende Sendecharakteristik eine bestimmte Orientierung einnimmt .

Alternativ oder zusätzlich können als Referenzereignisse aber auch definierte Datenstrukturen oder Dateninhalte des Funksignals mitgeteilt werden. In diesem Fall wird also mitgeteilt, bei Aussendung bzw. Empfang welcher definierten Datenstruktur oder welches definierten Dateninhaltes die rotierende Sendecharakteristik welche bestimmte Orientierung einnimmt. Dabei können als Referenzereignisse beispielsweise Identifizierungsdaten mitgeteilt werden, die bestimmte Datenabschnitte des Funksignals identifizieren. Werden die Daten in Form von Datenrahmen übertragen, so können als Identifizierungsdaten beispielsweise Nummern von Datenrahmen (Sequence Frame Number) mitgeteilt werden. Das mobile Objekt weiss in einen solchen Fall, bei Übertragung welches nummerierten Datenrahmens die rotierende Sendecharakteristik welche bestimmte Orientierung einnimmt. Diese Nummern der Datenrahmen sind in den entsprechenden Funksystemen ohnehin vorgesehen und können so auf einfache Weise als Referenzereignisse genutzt werden. Es können aber auch andere Datenstrukturen oder Dateninhalte genutzt werden, die ohnehin in den auszusendenden Funksignalen enthalten sind und denen sich eine bestimmte Orientierung der Sendecharakteristik zuordnen lässt.

Die rotierende Sendecharakteristik kann durch mindestens eine rotierende gerichtete Abstrahlung des Funksignals erzeugt werden. Der Fall einer einzigen rotierenden gerichteten Abstrahlung ist grundsätzlich aus dem eingangs zitierten Stand der Technik bekannt. Vorteilhaft kann aber die rotierende Sendecharakteristik durch mehrere rotierende gerichtete Abstrahlungen des Funksignals erzeugt werden. Es werden also mehrere gerichtete Abstrahlungen erzeugt, die einander in einem gewissen zeitlichen Abstand folgen, wobei die erste gerichtete Abstrahlung einen Umlauf von 360° ausgehend von einem bestimmten Abstrahlwinkel noch nicht abgeschlossen hat, wenn eine darauffolgende gerichtete Abstrahlung diesen bestimmten Abstrahlwinkel erreicht hat.

Alternativ zu einer gerichteten Abstrahlung kann die rotierende Sendecharakteristik aber auch durch eine omnidirektionale Abstrahlcharakteristik des Funksignals erzeugt werden, in der mindestens eine rotierende gerichtete Abschwächung des Funksignals erzeugt wird. Die rotierende Sendecharakteristik ergibt sich dann also durch mindestens ein rotierendes Minimum der Abstrahlung des Funksignals. Auch hier können analog zum Fall mehrerer gerichteter Abstrahlungen auch mehrere gerichtete Abschwächungen vorgesehen werden.

Die Referenzstation kann für alle hier beschriebene Verfahren prinzipiell ein beliebiges Funksignal aussenden, also beispielsweise statt reinen Positionsbestimmungs-Signalen auch Signale, mit denen Kommunikationsdaten oder Signalisierungsdaten eines Funk-Kommunikationssystems übertragen werden, die Sprachdaten, Multimediadaten oder sonstige Nutz- und Steuerdaten enthalten.

Wenn dem mobilen Objekt im Rahmen der vorstehend beschriebenen Verfahren zusätzlich noch die absolute Position der Referenzstation übermittelt bzw. eingespeichert wurde, so kann das mobile Objekt aus der relativen Position zur Referenzstation mit Hilfe der Kenntnis der absoluten Position der Referenzstation auch seine eigene absolute Position ermitteln.

Ein weiterer Gegenstand der vorliegenden Erfindung ist eine Sende-/Empfangseinrichtung eines Funk-Kommunikationssystems, die mindestens eine Einrichtung zur Erzeugung mindestens eines Funksignals mit rotierender Sendecharakteristik aufweist. Dies kann beispielsweise mit Hilfe von geeigneten Mitteln zur Formung einer gerichteten Abstrahlung von Sendesignalen wie z.B. unter Verwendung von Antennenarrays erfolgen. Eine solche Sende-/Empfangseinrichtung ist für die Durchführung der vorgenannten Verfahren geeignet. Die Sende-/Empfangseinrichtung kann weiter in geeigneter Weise für die Realisierung der vorstehend beschriebenen Verfahren angepasst werden.

Weiterer Gegenstand der vorliegenden Erfindung ist ein Teilnehmer-Endgerät eines Funk-Kommunikationssystems, aufweisend eine Einrichtung zur Detektion der rotierenden Sendecharakteristik des Funksignals, eine Einrichtung zur Überprüfung des Vorliegens eines Referenzereignisses, eine Einrichtung zur Ermittlung der Orientierung der Sendecharakteristik aus dem Referenzereignis, eine Einrichtung zur Bestimmung der relativen Lage zur Referenzstation aus der Orientierung der Sendecharakteristik und gegebenenfalls eine Einrichtung zur Ermittlung des relativen Abstandes zur Referenzstation aus Signalparametern des Funksignals. Dieses Teilnehmer-Endgerät ist also besonders geeignet, das vorgenannte Verfahren umzusetzen und damit eine Positionsbestimmung des Teilnehmer-Endgerätes zu gestatten. Das Teilnehmer-Endgerät kann weiterhin in geeigneter Weise für die Realisierung weiterer vorstehend beschriebenen Verfahrensschritte angepasst werden.

Gemäß einer Weiterbildung weist das Teilnehmer-Endgerät eine Einrichtung zur Detektion der rotierenden Sendecharakteristik eines ersten und eines zweiten Funksignals, eine Einrichtung zur Überprüfung des jeweiligen Vorliegens eines Referenzereignisses, eine Einrichtung zur Ermittlung der jeweiligen Orientierung der Sendecharakteristik des ersten und des zweiten Funksignals aus dem Referenzereignis, eine Einrichtung zur Bestimmung der relative Lage zu einer ersten und zu einer zweiten Referenzstation aus der jeweiligen Orientierung der Sendecharakteristik des ersten und des zweiten Funksignals und eine Einrichtung zur Ermittlung der relativen Position zu den Referenzstationen aus der relativen Lage zu der ersten und zweiten Referenzstation auf.

Alle vorgenannten Einrichtungen der Teilnehmer-Endgeräte sind zunächst als Repräsentanten für die entsprechenden Funktionsprinzipien zu verstehen und können auf unterschiedliche Weise durch tatsächliche Einrichtungen realisiert werden. Alle vorgenannten Einrichtungen können prinzipiell durch funktionell und/oder baulich separate tatsächliche Einrichtungen realisiert werden. Es können aber auch z.B. eine einzige oder mehrere funktionell und/oder baulich abgeschlossene Einrichtung jeweils mehrere Funktionen der genannten Einrichtungen zusammengefasst übernehmen oder es kann gar eine einzige funktionell und/oder baulich abgeschlossene Einrichtung alle Funktionen übernehmen. Dies ist auch durch eine Realisierung einer vorgenannten Einrichtung in Form einer Datenverarbeitungsprozedur, also einer Software, möglich.

Spezielle Ausführungsbeispiele der vorliegenden Erfindung werden nachfolgend am Beispiel eines Mobilfunk-Kommunikationssystems anhand der Figuren 1 bis 10 erläutert.

Es zeigen:
- FIG 1:: Lagebestimmung eines Mobilfunk-Endgerätes mit Hilfe zeitlicher Referenzereignisse
- FIG 2:: Lagebestimmung eines Mobilfunk-Endgerätes mit Hilfe von Nummern von Datenrahmen als Referenzereignisse
- FIG 3:: Positionsbestimmung eines Mobilfunk-Endgerätes aus zeitlichen Referenzereignissen mit Hilfe zweier Referenzstationen
- FIG 4:: Positionsbestimmung eines Mobilfunk-Endgerätes aus zeitlichen Referenzereignissen und Signalparametern des Funksignals einer Referenzstation
- FIG 5:: Verwendung mehrerer gerichteter, rotierender Funkstrahlen zur Lagebestimmung
- FIG 6:: Verwendung einer gerichteten, rotierenden Abschwächung des Funksignals zur Positionsbestimmung
- FIG 7:: Mobilfunk-Endgerät zur Positionsbestimmung nach einem Verfahren entsprechend FIG 4
- FIG 8:: Mobilfunk-Endgerät zur Positionsbestimmung nach einem Verfahren entsprechend FIG 3
- FIG 9:: Zeitschlitzstruktur eines TDD-Systems
- FIG 10:: Zeitschlitzrahmen eines TDD-Systems mit Mittamble

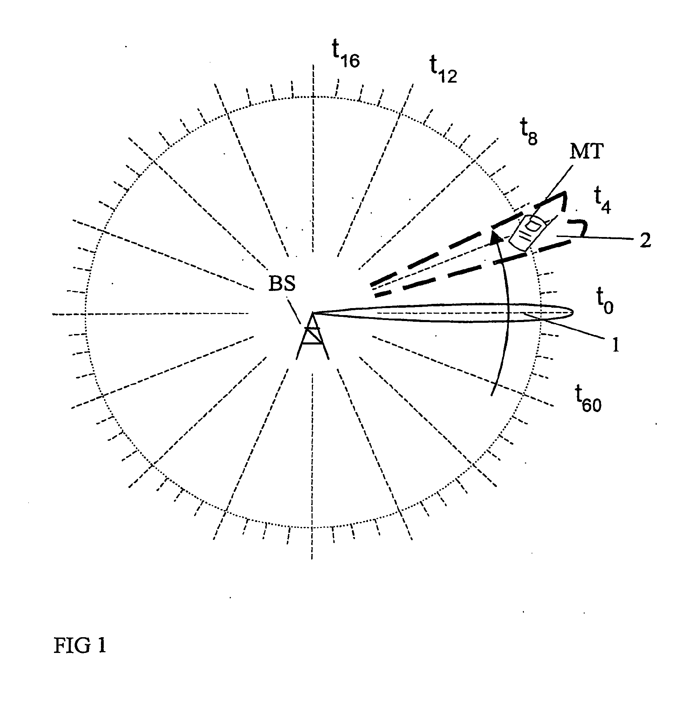

FIG 1 zeigt eine Basisstation BS eines Mobilfunk-Kommunikationssystems sowie ein entsprechendes Mobilfunk-Endgerät MT, also beispielsweise ein Mobiltelefon oder eine Navigationseinrichtung mit einer Schnittstelle zu diesem Mobilfunk-Kommunikationssystem. Die Basisstation BS sei im einfachsten Fall auch diejenige Basisstation des Mobilfunk-Kommunikationssystems, die aktuell das Mobilfunk-Endgerät MT für übliche Kommunikationsverbindungen versorgt, d.h. in deren Funkzelle das Mobilfunk-Endgerät MT gerade eingebucht ist. Wie im weiteren ausgeführt wird, können aber auch benachbarte Basisstationen BS für die im folgenden beschriebenen Verfahren herangezogen werden.

Die Basisstation BS ist so konfiguriert, dass sie ein Funksignal mit rotierender Sendecharakteristik 1 erzeugt, beispielsweise durch Strahlformung (Beam Forming) mit entsprechenden Antennenarrays. Es können prinzipiell aber auch rotierende Antennen verwendet werden. Als Funksignal kann beispielsweise ein Signalisierungskanal wie z.B. ein Broadcast-Kanal verwendet werden, der sowieso in jedem System vorhanden sein muss. Einem diskreten Zeitpunkt t₀, t₄, t₈ etc. ist jeweils eine diskreter Abstrahlwinkel des gerichteten Funksignals 1 zugeordnet. Im Beispiel nach FIG 1 ist der gesamte Umfang um die Basisstation BS, also ein Winkelbereich von 360°, in 6°-Schritte unterteilt. Das Funksignal wandert pro in einem definierten Zeitintervall Δt, beispielsweise in 10 ms, um das definierte Winkelintervall von 6° weiter und kommt in diesem Fall alle 600 ms, beispielsweise ausgehend von einem definierten Zeitnullpunkt T₀, jeweils bei 0° vorbei.

Durch eine entsprechende Signalisierung wird dem Mobilfunk-Endgerät MT dieser Zusammenhang zwischen Zeit und Abstrahlwinkel mitgeteilt und im Mobilfunk-Endgerät MT gespeichert. Eine solche Mitteilung muss im einfachsten Fall nur einmal erfolgen, wenn dieser Zusammenhang stets konstant bleibt. Es kann dem Mobilfunk-Endgerät MT dieser Zusammenhang für die versorgende Basisstation BS und gegebenenfalls auch für benachbarte Basisstationen BS übermittelt werden, wenn es im Rahmen eines Handovers zu der entsprechenden Basisstation BS wechselt. Es kann dem Mobilfunk-Endgerät MT dieser Zusammenhang aber auch für alle Basisstationen BS des Mobilfunk-Kommunikationssystems beispielsweise beim ersten Einbuchen des Mobilfunk-Endgeräts MT in das Mobilfunk-Kommunikationssystem mitgeteilt werden. In all diesen Fällen ist jedoch nur eine minimaler Signalisierungsaustausch zwischen Basisstation BS und Mobilfunk-Endgerät MT erforderlich.

Das Mobilfunk-Endgerät MT kann das Funksignal 1 entweder über geeignete Trainingssequenzen oder Pilotsignale innerhalb des Funksignals oder auch schlicht über das vom Mobilfunk-Endgerät MT gemessene Maximum der Feldstärke des Funksignals 1 detektieren. Wenn das Mobilfunk-Endgerät MT nun das Funksignal 1 detektiert, kann es mit Hilfe der Uhrzeit auf den Sektor 2 schließen, in dem es sich von der Basisstation BS aus befindet, also auf seine relative Lage zu der Basisstation BS. Da jedem zeitlichen Referenzereignis, also jedem Zeitpunkt t₀ bis tₙ ein diskreter Abstrahlwinkel zugeordnet ist, kann das Mobilfunk-Endgerät MT ohne jede zusätzlichen Signalisierung von oder zu der Basisstation BS allein durch eine interne Prüfung des Vorliegens des zeitlichen Referenzereignisses aus dem gespeicherten Zusammenhang zwischen Zeitpunkt und Abstrahlwinkel den betreffenden Abstrahlwinkel und damit die relative Lage zur Basisstation BS ermitteln.

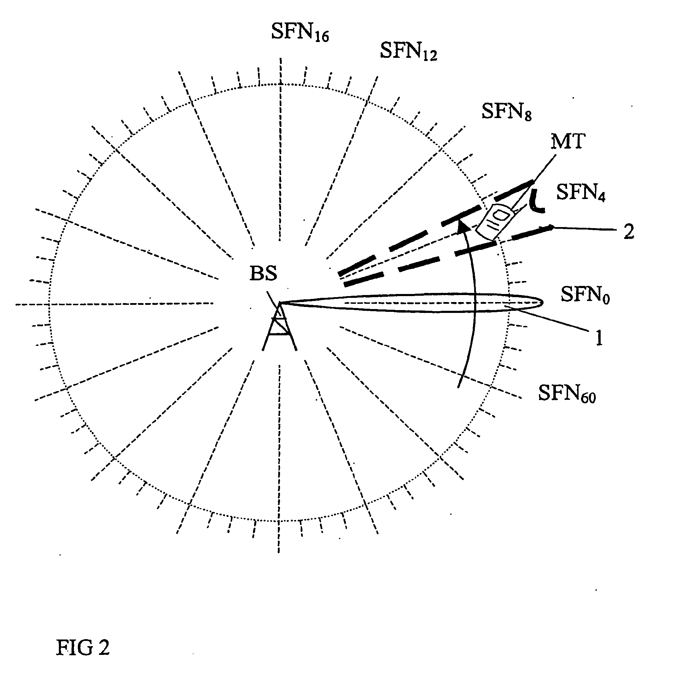

Alternativ zu zeitlichen Referenzereignissen können dem Mobilfunk-Endgerät aber auch Identifizierungsdaten für bestimmte Datenabschnitte des Funksignals 1 mitgeteilt werden, insbesondere Nummern von Datenrahmen (Sequence Frame Number SFN) des Funksignals 1. Diese Alternative ist in FIG 2 dargestellt. Das Mobilfunk-Endgerät MT weiss dann, dass bei Empfang eines Datenrahmens mit einer bestimmten Sequence Frame Number SFN₀, SFN₄, SFN₈ etc. dessen Aussendung unter einem definierten Abstrahlwinkel, beispielsweise 0° für SFN₀ erfolgte. Dieser Zusammenhang zwischen Sequence Frame Number und Abstrahlwinkel kann dem Mobilfunk-Endgerät MT analog zu den vorher beschriebenen Alternativen für zeitliche Referenzsignale durch eine entsprechende Signalisierung mitgeteilt werden und im Mobilfunk-Endgerät MT gespeichert werden. Aus dem Zusammenhang zwischen gesendeter Sequence Frame Number und Abstrahlrichtung kann dann das Mobilfunk-Endgerät MT nach Detektion des Funksignals 1 wiederum den Sektor 2 ermitteln, in dem es sich befindet, also seine relative Lage zur Basisstation BS.

Einige Vorteile dieses Verfahrens sollen nun dargestellt werden: Es sind praktisch keine zusätzlichen navigationsspezifischen Einrichtungen nötig. Weiterhin muss die Aussendung von Funksignalen der Basisstation BS in der aktuellen Mobilfunkzelle nicht unterbrochen werden, um benachbarte Basisstationen BS zu messen, da die Funksignale im Rahmen der üblichen Frequenz- und Kanalzuteilung des Mobilfunk-Kommunikationssystems aufeinander abgestimmt sind. Aus diesem Grund ergibt sich gerade für die Anwendung der Erfindung in einem Mobilfunk-Kommunikationssystem auch kaum eine zusätzliche Interferenz durch das zur Positionsbestimmung benutzte Funksignal. Das Mobilfunk-Endgerät MT muss keine eigene Signalisierung aktiv aussenden. Die Genauigkeit dieses Verfahrens ist überdies skalierbar. Je schmaler die gerichtete Abstrahlung des Funksignals erfolgt, also je schmaler der dadurch entstehende Funkstrahl, desto höher ist die Winkelauflösung und in desto kleinere Winkelintervalle kann die Einteilung gemäß FIG 1 und 2 erfolgen.

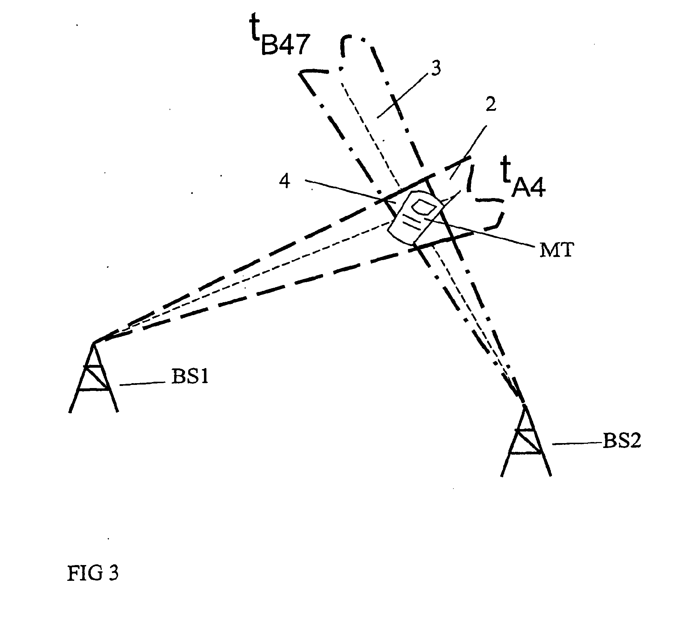

FIG 3 zeigt eine Methode zur Positionsbestimmung mit Hilfe von zwei Referenzstationen BS1, BS2. Das Mobilfunk-Endgerät MT ermittelt jeweils seine relative Lage zu jeder der Basisstationen BS1, BS2 nach einem der bereits beschriebenen Verfahren. In FIG 3 ist beispielhaft die Methode mit Hilfe von zeitlichen Referenzereignissen dargestellt. Das Mobilfunk-Endgerät MT ermittelt im Fall nach FIG 3, dass es sich relativ zur Basisstation BS1 unter einem Winkel befindet, der dem Abstrahlungszeitpunkt t_{A4} entspricht und relativ zur Basisstation BS2 unter einem Winkel, der dem Abstrahlungszeitpunkt t_{B47} entspricht. Damit erhält das Mobilfunk-Endgerät MT die Kenntnis, dass es sich einerseits in dem Sektor 2 relativ zur Basisstation BS1 befindet, andererseits aber auch in dem Sektor 3 relativ zur Basisstation BS2. Aus der geometrischen Ermittlung des Überschneidungsbereiches 4 dieser beiden Sektoren 2, 3 kann das Mobilfunk-Endgerät MT seine Position zu ermitteln. Hierzu benötigt das Mobilfunk-Endgerät MT lediglich noch die Kenntnis der Positionen der Basisstationen BS1, BS2 relativ zueinander oder deren absolute Position. Diese können dem Mobilfunk-Endgerät MT im Rahmen der bereits erwähnten Signalisierung mit übermittelt werden.

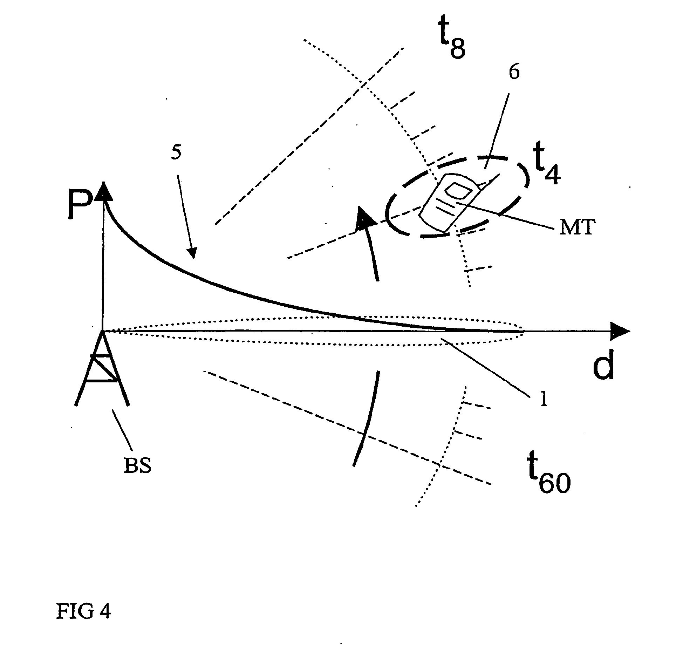

Ein dazu alternatives Verfahren ist in FIG 4 dargestellt. Hierbei ermittelt wiederum das Mobilfunk-Endgerät MT zunächst seine relative Lage zu der Basisstation BS nach einem der vorgenannten Verfahren, nach dem Beispiel in FIG 4 über zeitliche Referenzereignisse. Weiterhin bestimmt das Mobilfunk-Endgerät MT bestimmte Signalparameter des Funksignals 1, insbesondere die Abschwächung 5 (Path Loss)der Sendeleistung P des Funksignals 1 entlang seines Ausbreitungsweges d im Vergleich zu einem Referenzsignal. Da diese Abschwächung 5 ein Maß für die Länge des Ausbreitungsweges d ist, kann das Mobilfunk-Endgerät MT daraus seinen relativen Abstand d zu der Basisstation BS ermitteln. Aus der ermittelten relativen Lage und dem ermittelten relativen Abstand d kann dann das Mobilfunk-Endgerät MT seine relative Position 6 zu der Basisstation BS ermitteln. Wurde dem Mobilfunk-Endgerät MT überdies im Rahmen der bereits erwähnten Signalisierung auch die absolute Position der Basisstation BS mitgeteilt, so kann das Mobilfunk-Endgerät MT aus den gewonnenen Kenntnissen auch seine absolute Position ermitteln. Statt der Abschwächung des Funksignals 1 kann aber auch die Signallaufzeit gemessen werden oder eine entsprechende Information (Timing Advance) aus dem Informationsgehalt der Daten des Funksignal 1 entnommen werden.

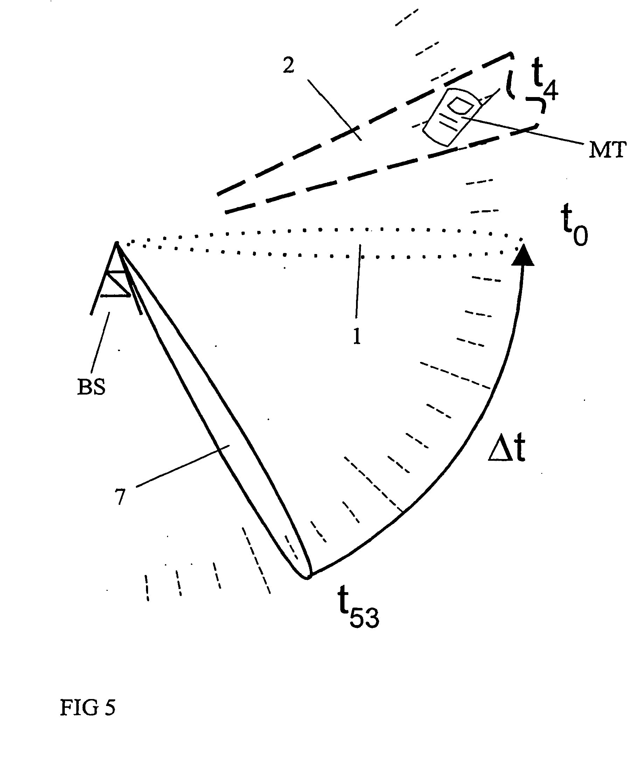

FIG 5 zeigt eine weitere Alternative, bei der zur Erzeugung der rotierenden Sendecharakteristik nicht nur eine gerichtete, rotierende Abstrahlung 1, sondern mehrere gerichtete, rotierende Abstrahlungen 1, 7 der Basisstation BS vorgesehen sind. Über jede der gerichteten Abstrahlungen kann dabei zeitgleich das identische Funksignal übertragen werden. Zwischen den beiden Abstrahlungen 1, 7 liegt eine Zeitdifferenz Δt, der eine entsprechende Winkeldifferenz der Abstrahlungswinkel entspricht. Beträgt, wie im Fall der FIG 5, der Abstrahlungswinkel der ersten Abstrahlung 1 zum Zeitpunkt t₀ gerade 0°, so erreicht die zweite Abstrahlung diesen Abstrahlungswinkel nach der Zeit Δt. Damit können mögliche Ungenauigkeiten der Positionsbestimmung auf Grund von Signalschwankungen der gerichteten Abstrahlungen 1, 7 kompensiert werden, da pro Zeit häufiger eine gerichtete Abstrahlung 1, 7 detektiert wird und so in kürzerer Zeit über mehrere gerichtete Abstrahlungen 1, 7 gemittelt werden kann.

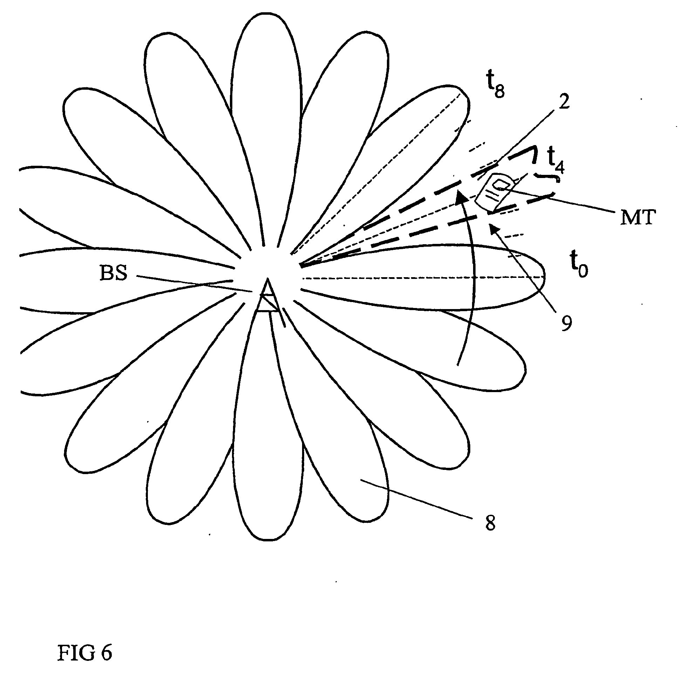

Eine weitere Alternative der vorliegenden Erfindung ist in FIG 6 dargestellt. Es werden dort durch die Basisstation BS N gerichtete Abstrahlungen 8 für das beschriebene Funksignal erzeugt, die als Resultat eine praktisch omnidirektionale Sendecharakteristik liefern. Nun wird in umlaufender Reihenfolge nacheinander jeweils eine der gerichteten Abstrahlungen 8 für eine bestimmte Zeitdauer Δt ausgeschaltet, so dass in der omnidirektionalen Sendecharakteristik eine gerichtete Abschwächung 9 entsteht, die wiederum zu einer rotierenden Sendecharakteristik des Funksignals führt. Die weitere Detektion der rotierenden Sendecharakteristik durch das Mobilfunk-Endgerät MT und der Ermittlung der relativen Lage in einem Sektor 2 erfolgt analog zu den bereits beschriebenen Verfahren, wobei das Mobilfunk-Endgerät MT nun jedoch das Minimum der Abstrahlung (d.h. das Minimum der Empfangsleistung) zur Detektion heranzieht. Dieses Verfahren bietet eine besonders vorteilhafte Möglichkeit, um in üblichen Mobilfunk-Kommunikationssystemen benutzt zu werden, da der entsprechende Kanal des verwendeten Funksignals in der meisten Zeit zur Verfügung steht und lediglich kurzeitige Einbrüche der Empfangsleistung stattfinden, die bei den in Mobilfunksystemen vorhandenen Fadingkanälen ohnehin auftreten können. Damit kann also praktisch jedes beliebige Funksignal bzw. jeder beliebige Kanal für das beschriebene Verfahren verwendet werden, ohne dass der übliche Betrieb des Mobilfunk-Kommunikationssystems merklich beeinflusst wird.

Im folgenden soll auf eine spezielle Möglichkeit der Realisierung der vorliegenden Erfindung in einem Mobilfunk-Kommunikationssystem eingegangen werden. In Mobilfunk-Kommunikationssystemen werden Daten wie Signalisierungsdaten, Sprachdaten oder andere Nutzdaten über eine Funkschnittstelle zwischen Basisstationen BS und Mobilfunk-Endgeräten MT übertragen. Ein Beispiel für aktuelle Mobilfunk-Kommunikationssysteme sind Mobilfunknetze der zweiten Generation nach dem GSM-Standard und mit einem TDMA-Übertragungsverfahren, die bei Trägerfrequenzen von 900, 1800 oder 1900 MHz betrieben werden. Ein weiteres Beispiel sind zukünftige Mobilfunknetze der dritten Generation wie UMTS, welches auf einem CDMA-, TD/CDMA-, FDD (Frequency Division Duplex)- oder TDD (Time Division Duplex)-Übertragungsverfahren basiert und Trägerfrequenzen im Bereich von ca. 2000 MHz nutzt. Auf diesen Trägerfrequenzen werden die zu übertragenden Daten zwischen den netzseitigen Basisstationen BS des Mobilfunknetzes und den Mobilfunk-Endgeräten MT übertragen.

Spezielle Mobilfunknetze sind also solche, die eine Zeitschlitzstruktur aufweisen. Die Zeitschlitze sind dabei in der Regel in Zeitschlitzrahmen zusammengefasst, die wiederum Teil einer höheren Rahmenstruktur sein können. Beispiele für solche Mobilfunknetze mit einer Zeitschlitzstruktur sind TDMA-, TDD-, TD/CDMA-, TD/SDCDMA-und FDD-Systeme.

Innerhalb eines Zeitschlitzes einer Datenverbindung wird normalerweise ein Datenrahmen oder Burst mit einer bestimmten, vordefinierten Struktur übertragen. Der Datenrahmen kann neben Nutzdaten noch weitere Daten wie Kontrolldaten, Messdaten oder Signalisierungsdaten beinhalten, die für die Übertragung der Nutzdaten notwendig oder hilfreich sind.

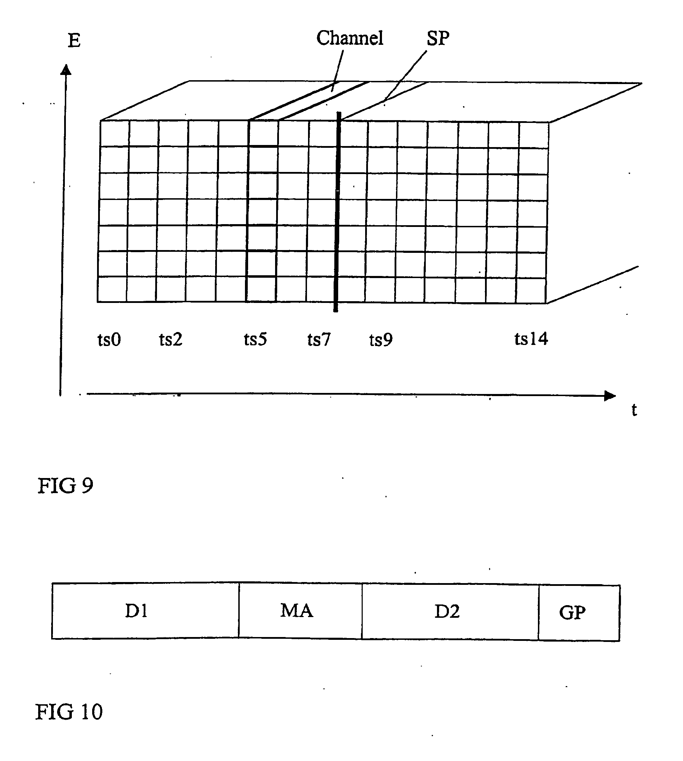

FIG 9 zeigt eine Zeitschlitzstruktur eines TDD-Systems, bei dem ein Zeitschlitzrahmen 16 Zeitschlitze ts0 bis ts15 umfasst. In FIG 9 sind die ersten acht Zeitschlitze ts0 bis ts7 der Abwärts-Verbindung (Downlink) zugeordnet, die übrigen Zeitschlitze ts8 bis ts15 nach dem Umschaltpunkt SP (Switching Point) sind der Aufwärts-Verbindung (Uplink) zugeordnet. Es können innerhalb eines solchen Zeitschlitzrahmens auch mehrere Umschaltpunkte SP vorgesehen werden und diese Umschaltpunkte können an unterschiedlichen Stellen in den Zeitschlitzrahmen eingefügt werden.

FIG 10 zeigt die Aufteilung eines Datenrahmens (Burst), der innerhalb eines Zeitschlitzes übertragen wird. Dieser Datenrahmen umfasst eine erste Menge von Nutzdaten D1, gefolgt von Messdaten bzw. Signalisierungsdaten MA (Mittamble), einer zweiten Menge von Nutzdaten D2 und Kontrolldaten GP zur Überprüfung einer fehlerfreien Übertragung der Nutzdaten. Die Mittamble MA werden in der Regel insbesondere für Messungen der Übertragungseigenschaften der Funkverbindung vorgesehen.

Im Rahmen der vorliegenden Erfindung kann die in FIG 10 dargestellte Mittamble MA eines UMTS-Mobilfunk-Kommunikationssystems, das nach einem TDD-Verfahren arbeitet, bei einem Funksignal mit rotierender Sendecharakteristik dazu benutzt werden, dieses Funksignal eindeutig.einer bestimmten Basisstation BS zuzuordnen. Diese Mittamble MA kann dann als Trainingsequenz für die Detektion der rotierenden Sendecharakteristik verwendet werden.

Bei einem FDD-System ist bei bisher bestehenden oder geplanten Systemen in der Regel keine Mittamble MA vorgesehen. Bei solchen Systemen kann aber zur Realisierung der vorliegenden Erfindung statt einer Mittamble MA ein zusätzliches Pilotsignal verwendet werden, das ebenso wie die Mittamble MA im Fall eines TDD-Systems zur Detektion und eindeutigen Zuordnung von rotierenden Sendecharakteristiken zu bestimmten Basisstationen BS verwendet werden kann.

Das erfindungsgemäße Verfahren kann also bei Mobilfunknetzen nach dem UMTS-Standard im FDD und TDD Modus angewendet werden. Wie bereits beschrieben kann von Datenrahmen zu Datenrahmen die gerichtete Abstrahlung des Funksignals um einen vorher definierten Winkelbetrag weitergeschaltet werden. Die Weiterschaltung um einen bestimmten Winkelbetrag kann aber auch gekoppelt mit anderen Referenzereignissen erfolgen, beispielsweise mit jedem Zeitschlitz bei Zeitmultiplex-Systemen oder bei TD-SCDMA-Systemen beispielsweise mit jedem Unterrahmen (Subframe) der Datenrahmen-Struktur. Durch solche geeigneten Maßnahmen kann die Detektiergeschwindigkeit wiederum geeignet variiert und im Idealfall erhöht werden. Über die Datenrahmen-Nummer SFN kann wie beschrieben das Mobilfunk-Endgerät MT den zugehörigen Winkel ermitteln.

Bei TDD kann beispielsweise eine oder mehrere Mittambeln MA ohne weitere Nutzdaten innerhalb des Datenrahmens gesendet, denn für das Mobilfunk-Endgerät MT kann zur Detektion bereits alleine der Empfang der Mittamble eines Datenrahmens genügen, weitere Dateninhalten des Datenrahmens sind grundsätzlich nicht erforderlich. Dieser Datenrahmen, der alleine aus einer Mittamble MA besteht, kann potentiell zusätzlich zu einer zellweit gesendeten Mittamble MA übertragen werden, die eventuell aus Kompatibilitätsgründen für ältere Mobilfunk-Endgeräte MT weiterhin gesendet werden muss, um für alle Mobilfunk-Endgeräte MT die für den Kommunikationsbetrieb benötigten Daten bereitzustellen. Durch die guten Korrelationseigenschaften der Mittambeln MA untereinander wird bereits automatisch gewährleistet, dass durch die im Rahmen des vorliegenden Verfahrens gesendete Mittamble MA die Intrazellinferenz kaum vergrößert wird. Darüber hinaus kann auch die Leistung der zellweit gesendeten Mittamblen MA abgesenkt werden, um die Interferenz im System zu verringern. Im Extremfall wird die Leistung der gegebenenfalls zusätzlich gesendeten Mittambeln MA genauso groß gewählt wie die Absenkung der zellweiten Mittamble MA. Hierdurch bleibt die Interzell-Interferenz unverändert gegenüber einem System ohne Navigationsstrahl. Darüber hinaus ist diese Lösung für den Sendeverstärker der Basisstation BS am effizientesten, da keine Leistungssprünge im Sendesignal auftreten.

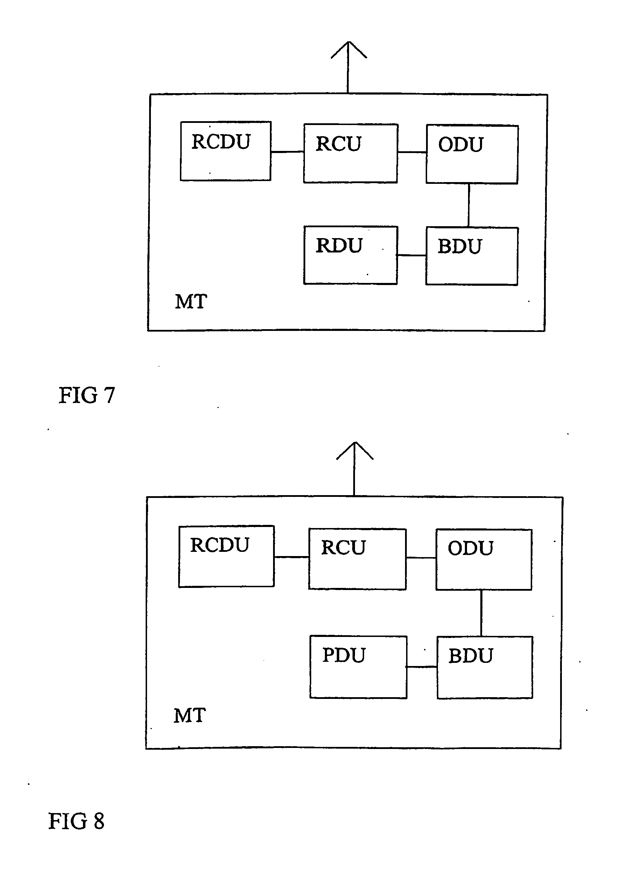

Die Figuren 7 und 8 zeigen Mobilfunk-Endgeräte MT spezielle Teilnehmer-Endgerät eines Funk-Kommunikationssystems. Diese Endgeräte weisen neben den nachfolgend erläuterten Einrichtungen übliche Einrichtungen zur Funk-Kommunikation innerhalb des Funk-Kommunikationssystems auf.

Das Endgerät MT nach FIG 7 ist geeignet zur Realisierung eines Verfahrens nach FIG 4. Es weist insbesondere folgendes auf: eine Einrichtung (Rotating Characteristic Detection Unit RCDU) zur Detektion der rotierenden Sendecharakteristik des Funksignals, eine Einrichtung (Reference Check Unit RCU) zur Überprüfung des Vorliegens eines Referenzereignisses, eine Einrichtung (Orientation Determination Unit ODU) zur Ermittlung der Orientierung der Sendecharakteristik aus dem Referenzereignis, eine Einrichtung (Bearing Determination Unit BDU) zur Bestimmung der relativen Lage zur Referenzstation aus der Orientierung der Sendecharakteristik und eine Einrichtung (Range Determination Unit RDU) zur Ermittlung des relativen Abstandes zur Referenzstation aus Signalparametern des Funksignals. Damit kann das Endgerät MT seine Position nach dem bereits anhand der FIG 4 beschriebenen Verfahren bestimmen.

Das Endgerät MT nach FIG 8 ist geeignet zur Realisierung eines Verfahrens nach FIG 3. Es weist insbesondere folgendes auf: eine Einrichtung (Rotating Characteristic Detection Unit RCDU) zur Detektion der rotierenden Sendecharakteristik eines ersten und eines zweiten Funksignals, eine Einrichtung (Reference Check Unit RCU) zur Überprüfung des jeweiligen Vorliegens eines Referenzereignisses, eine Einrichtung (Orientation Determination Unit ODU) zur Ermittlung der jeweiligen Orientierung der Sendecharakteristik des ersten und des zweiten Funksignals aus dem Referenzereignis, eine Einrichtung (Bearing Determination Unit BDU) zur Bestimmung der relative Lage zu einer ersten und zu einer zweiten Referenzstation aus der jeweiligen Orientierung der Sendecharakteristik des ersten und des zweiten Funksignals und eine Einrichtung (Position Determination Unit PDU) zur Ermittlung der relativen Position zu den Referenzstationen aus der relativen Lage zu der ersten und zweiten Referenzstation. Damit kann das Endgerät MT seine Position nach dem bereits anhand der FIG 3 beschriebenen Verfahren bestimmen.

## Patentansprüche

1. Verfahren zur Positionsbestimmung eines mobilen Objekts (MT) unter Verwendung mindestens eines Funksignals mit rotierender Sendecharakteristik (1, 7, 9) mindestens einer Referenzstation (BS),
**dadurch gekennzeichnet, dass**
- das mobile Objekt (MT) bei Detektion des Funksignals das Vorliegen eines Referenzereignisses (t0, t4, ..., SFN0, SFN4, ...) überprüft, wobei dem mobilen Objekt (MT) der Zusammenhang zwischen der Orientierung der Sendecharakteristik (1, 7, 9) und Referenzereignissen (t0, t4, ...; SFN0, SFN4, ...) bekannt ist und wobei als Referenzereignisse definierte Datenstrukturen oder Dateninhalte (SFN0, SFN4, ...) des Funksignals mitgeteilt werden, und
- das mobile Objekt (MT) aus dem Referenzereignis (t0, t4, ..., SFN0, SFN4, ...) die Orientierung der Sendecharakteristik (1, 7, 9) ermittelt, und aus der Orientierung der Sendecharakteristik (1, 7, 9) eine relative Lage zur Referenzstation (BS) bestimmt.

2. Verfahren nach Anspruch 1,
**dadurch gekennzeichnet, dass**
das mobile Objekt (MT) zusätzlich seinen relativen Abstand (d) zur Referenzstation (BS) aus Signalparametern (P) des Funksignals ermittelt.

3. Verfahren nach dem vorhergehenden Anspruch,
**dadurch gekennzeichnet, dass**
als Signalparameter (P) seitens des mobilen Objekts gemessene physikalische Übertragungsparameter des Funksignals betrachtet werden.

4. Verfahren nach Anspruch 2,
**dadurch gekennzeichnet, dass**
als Signalparameter Dateninhalte des Funksignals betrachtet werden, die Informationen über physikalische Ubertragungsparameter des Funksignals beinhalten.

5. Verfahren nach einem vorhergehenden Anspruch,
**dadurch gekennzeichnet, dass**
- das mobile Objekt. (MT) bei Detektion eines zweiten Funksignals das Vorliegen eines Referenzereignisses (t0, t4, ..., SFN0, SFN4, ...) überprüft, aus dem Referenzereignis (t0, t4, ..., SFN0, SFN4, ...) die Orientierung der Sendecharakteristik (1, 7, 9) des zweiten Funksignals ermittelt, und aus der Orientierung der Sendecharakteristik (1, 7, 9) des zweiten Funksignals seine relative Lage zu einer zweiten Referenzstation (BS2) bestimmt, und
- das mobile Objekt (MT) aus der relativen Lage zu der ersten und zweiten Referenzstation (BS1, BS2) seine relative Position zu den Referenzstationen (BS1, BS2) bestimmt.

6. Verfahren nach einem vorhergehenden Anspruch,
**dadurch gekennzeichnet, dass**
als Referenzereignisse zeitliche Referenzereignisse (t0, t4, ...) mitgeteilt werden.

7. Verfahren nach Anspruch 1,
**dadurch gekennzeichnet, dass**
als Referenzereignisse Identifizierungsdaten (SFN0, SFN4, ...) mitgeteilt werden, die bestimmte Datenabschnitte des Funksignals identifizieren.

8. Verfahren nach dem vorhergehenden Anspruch,
**dadurch gekennzeichnet, dass**
als Identifizierungsdaten (SFN0, SFN4, ...) Nummern von Datenrahmen mitgeteilt werden.

9. Verfahren nach einem vorhergehenden Anspruch,
**dadurch gekennzeichnet, dass**
die Sendecharakteristik durch mindestens eine rotierende gerichtete Abstrahlung (1, 7) des Funksignals erzeugt wird.

10. Verfahren nach dem vorhergehenden Anspruch,
**dadurch gekennzeichnet, dass**
die Sendecharakteristik durch mehrere rotierende gerichtete Abstrahlungen (1, 7) des Funksignals erzeugt wird.

11. Verfahren nach einem der Ansprüche 1 bis 8,
**dadurch gekennzeichnet, dass**
die Sendecharakteristik durch eine omnidirektionale Abstrahlcharakteristik (8) des Funksignals erzeugt wird, in der mindestens eine rotierende gerichtete Abschwächung (9) des Funksignals erzeugt wird.

12. Verfahren nach einem der Ansprüche 1 bis 11,
**dadurch gekennzeichnet, dass**
durch das Funksignal Signalisierungsdaten und/oder Kommunikationsdaten eines Funk-Kommunikationssystems übertragen werden.

13. Teilnehmer-Endgerät (MT) eines Funk-Kommunikationssystems, aufweisend eine Einrichtung (RCDU) zur Detektion eines Funksignals mit rotierender Sendecharakteristik (1, 7, 9), eine Einrichtung (RCU) zur Überprüfung des Vorliegens eines als Datenstruktur oder Dateninhalt (SFN0, SFN4, ...) des Funksignals definierten Referenzereignisses (t0, t4, ..., SFM0, SFN4, ...), eine Einrichtung (ODU) zur Ermittlung der Orientierung einer Sendecharakteristik (1, 7, 9) des Funksignals aus dem Referenzereignis (t0, t4, ..., SFN0, SFN4, ...), eine Einrichtung (BDU) zur Bestimmung einer relativen Lage zu einer Referenzstation (BS) aus der Orientierung der Sendecharakteristik (1, 7, 9).

14. Teilnehmer-Endgerät (MT) nach Anspruch 13,
**gekennzeichnet durch**
eine Einrichtung (RDU) zur Ermittlung des relativen Abstandes (d) zur Referenzstation (BS) aus Signalparametern des Funksignals.

## Claims

1. Method for the determining the position of a mobile object (MT) using at least one radio signal with a rotating transmission characteristic (1, 7, 9) of at least one reference station (BS),
**characterised in that**
- the mobile object (MT) when detecting the radio signal checks for the presence of a reference event (t0, t4, ..., SFN0, SFN4, ...), with the relationship between the orientation of the transmission characteristic (1, 7, 9) and reference events (t0, t4, ..., SFN0, SFN4, ...) being known to the mobile object (MT) and defined data structures or data content (SFN0, SFN4, ...) of the radio signal being communicated as reference events, and
- the mobile object (MT) determines the orientation of the transmission characteristic (1, 7, 9) from the reference event (t0, t4, .., SFN0, SFN4, ...), and
determines a position relative to the reference station (BS) from the orientation of the transmission characteristic (1, 7, 9).

2. Method in accordance with claim 1,
**characterised in that**
the mobile object (MT) additionally determines its relative distance (d) to the reference station (BS) from the signal parameters (P) of the radio signal.

3. Method in accordance with the preceding claim,
**characterised in that**
physical transmission parameters of the radio signal measured by the mobile object are regarded as signal parameters (P).

4. Method in accordance with claim 2,
**characterised in that**
data content of the radio signal containing information on physical transmission parameters of the radio signal is regarded as the signal parameter.

5. Method in accordance with a preceding claim,
**characterised in that**
- the mobile object (MT) when detecting a second radio signal checks for the presence of a reference event (t0, t4, .., SFN0, SFN4, ...), determines the orientation of the transmission characteristic (1, 7, 9) of the second radio signal from the reference event (t0, t4, .., SFN0, SFN4, ...), and from the orientation of the transmission characteristic (1, 7, 9) of the second radio signal determines its position relative to a second reference station (BS2), and
- the mobile object (MT) determines its position relative to the reference stations (BS1, BS2) from the position relative to the first and second reference station (BS1, BS2).

6. Method in accordance with a preceding claim,
**characterised in that**
time-related reference events (t0, t4, ...) are communicated as reference events.

7. Method in accordance with claim 1,
**characterised in that**
identification data (SFN0, SFN4, ...) that identifies the specific data segments of the radio signal are communicated as reference events.

8. Method in accordance with the preceding claim,
**characterised in that**
numbers of data frames are communicated as identification data (SFN0, SFN4, ...).

9. Method in accordance with a preceding claim,
**characterised in that**
the transmission characteristic is generated by at least one rotating directional radiation (1, 7) of the radio signal.

10. Method in accordance with the preceding claim,
**characterised in that**
the transmission characteristic of the radio signal is generated by several rotating directional radiations (1, 7).

11. Method in accordance with one of claims 1 to 8,
**characterised in that**
the transmission characteristic is generated by an omnidirectional radiation characteristic (8) of the radio signal in which at least one rotating directional attenuation (9) of the radio signal is generated.

12. Method in accordance with one of claims 1 to 11,
**characterised in that**
signalling data and/or communication data of a radio communication system is transmitted by the radio signal.

13. User terminal (MT) of a radio communication system, having a device (RCDU) for detection of a radio signal with a rotating transmission characteristic (1, 7, 9), a device (RCU) for checking the presence of a reference event (t0, t4, ..., SFN0, SFN4, ...) defined as the data structure or data content (SFN0, SFN4, ...) of the radio signal, a device (ODU) for determining the orientation of a transmission characteristic (1, 7, 9) of the radio signal from the reference event (t0, t4, ..., SFN0, SFN4, ...), a device (BDU) for determining a position relative to a reference station (BS) from the orientation of the transmission characteristic 1, 7, 9).

14. User terminal (MT) in accordance with claim 13,
**characterised by**
a device (RDU) for determining the relative distance (d) to the reference station (BS) from signal parameters of the radio signal.

## Revendications

1. Procédé de détermination de la position d'un objet mobile (MT) moyennant l'utilisation d'au moins un signal radio avec une caractéristique d'émission en rotation (1, 7, 9) d'au moins une station de référence (BS),
**caractérisé en ce que**
- l'objet mobile (MT), à la détection du signal radio, vérifie la présence d'un événement de référence (t0, t4, ..., SFN0, SFN4, ...), le rapport entre l'orientation de la caractéristique d'émission (1, 7, 9) et des événements de référence (t0, t4, ..., SFN0, SFN4, ...) étant connu de l'objet mobile (MT) et des structures de données ou contenus de données (SFN0, SFN4, ...) du signal radio définis en tant qu'événements de référence étant communiqués et
- l'objet mobile (MT) détermine l'orientation de la caractéristique d'émission (1, 7, 9) à partir de l'événement de référence (t0, t4, ..., SFN0, SFN4, ...) et
- une position relative par rapport à la station de référence (BS) est déterminée à partir de l'orientation de la caractéristique d'émission (1, 7, 9).

2. Procédé selon la revendication 1,
**caractérisé en ce que**
l'objet mobile (MT) détermine additionnellement sa distance relative (d) par rapport à la station de référence (BS) à partir de paramètres de signaux (P) du signal radio.

3. Procédé selon la revendication précédente,
**caractérisé en ce que**
sont considérés en tant que paramètres de signaux (P) des paramètres de transmission physiques du signal radio, mesurés du côté de l'objet mobile.

4. Procédé selon la revendication 2,
**caractérisé en ce que**
sont considérés en tant que paramètres de signaux des contenus de données du signal radio qui contiennent des informations sur des paramètres de transmission physiques du signal radio.

5. Procédé selon l'une des revendications précédentes,
**caractérisé en ce que**
- l'objet mobile (MT), à la détection d'un deuxième signal radio, vérifie la présence d'un événement de référence (t0, t4, ..., SFN0, SFN4, ...), détermine l'orientation de la caractéristique d'émission (1, 7, 9) du deuxième signal radio à partir de l'événement de référence (t0, t4, ..., SFN0, SFN4, ...) et détermine sa position relative par rapport à une deuxième station de référence (BS2) à partir de l'orientation de la caractéristique d'émission (1, 7, 9) du deuxième signal radio et
- l'objet mobile (MT) détermine sa position relative par rapport aux stations de référence (BS1, BS2) à partir de la position relative par rapport à la première et à la deuxième station de référence (BS1, BS2).

6. Procédé selon l'une des revendications précédentes,
**caractérisé en ce que**
sont communiqués, en tant qu'événements de référence, des événements de référence temporels (t0, t4, ...).

7. Procédé selon la revendication 1,
**caractérisé en ce que**
sont communiquées, en tant qu'événements de référence, des données d'identification (SFN0, SFN4, ...) qui identifient des sections de données déterminées du signal radio.

8. Procédé selon la revendication précédente,
**caractérisé en ce que**
sont communiquées, en tant que données d'identification (SFN0, SFN4, ...), des numéros de trames de données.

9. Procédé selon l'une des revendications précédentes,
**caractérisé en ce que**
la caractéristique d'émission est générée par au moins un rayonnement dirigé en rotation (1, 7) du signal radio.

10. Procédé selon l'une des revendications précédentes,
**caractérisé en ce que**
la caractéristique d'émission est générée par plusieurs rayonnements dirigés en rotation (1, 7) du signal radio.

11. Procédé selon l'une des revendications 1 à 8,
**caractérisé en ce que**
la caractéristique d'émission en rotation est générée par une caractéristique de rayonnement omnidirectionnelle (8) du signal radio dans laquelle est générée au moins une atténuation (9) dirigée en rotation du signal radio.

12. Procédé selon l'une des revendications 1 à 11,
**caractérisé en ce que**
sont transmises, par le signal radio, des données de signalisation et/ou de communication d'un système de radiocommunication.

13. Terminal d'abonné (MT) d'un système de radiocommunication, comportant un équipement (RCDU) pour détecter un signal radio avec une caractéristique d'émission en rotation (1, 7, 9), un équipement (RCU) pour vérifier la présence d'un événement de référence (t0, t4, ..., SFN0, SFN4, ...) défini en tant que structure de données ou contenu de données (SFN0, SFN4, ...) du signal radio, un équipement (ODU) pour déterminer l'orientation d'une caractéristique démission (1, 7, 9) du signal radio à partir de l'événement de référence (t0, t4, ..., SFN0, SFN4, ...), un équipement (BDU) pour définir une position relative par rapport à une station de référence (BS) à partir de l'orientation de la caractéristique d'émission (1, 7, 9).

14. Terminal d'abonné (MT) selon la revendication 13,
**caractérisé par**
un équipement (RDU) pour déterminer la distance relative (d) par rapport à la station de référence (BS) à partir des paramètres de signaux du signal radio.
